(19) Europäisches Patentamt

European Patent Office

Office européen des brevets

(11) Publication number: **0 298 925**
**A2**

## (12) EUROPEAN PATENT APPLICATION

(21) Application number: 88830194.2

(22) Date of filing: 09.05.88

(51) Int. Cl.⁴: **C 09 D 3/81**
**C 04 B 26/02, E 04 F 13/02**

(30) Priority: 14.05.87 IT 4793687

(43) Date of publication of application:
**11.01.89 Bulletin 89/02**

(84) Designated Contracting States:
**AT BE CH FR GB LI NL SE**

(71) Applicant: Di Girolamo, Raffaella
Via S.S. Pietro e Paolo, 30
I-00144 Roma (IT)

(72) Inventor: Di Girolamo, Raffaella
Via S.S. Pietro e Paolo, 30
I-00144 Roma (IT)

(74) Representative: Massari, Marcello
Studio M. Massari S.r.l. 23, Via Fontanella Borghese
I-00186 Roma (IT)

(54) A composition intended to have a protective and aesthetical function similar to the function of coatings formed by terracotta elements.

(57) Composition with protective and aesthetical function similar to the function of coatings formed by terracotta elements produceed by mixing:
a highly resilient latex;
a bituminous emulsion;
a first inert comprising washed, ground and sifted pit sand;
a second inert comprising a baked and ground clay;
a thickening agent comprising an emulsionated acrylic copolymer.

EP 0 298 925 A2

Bundesdruckerei Berlin

## Description

**"A composition intended to have a protective and aesthetical function similar to the function of coatings formed by terracotta elements"**

This invention refers to a composition intended to have a protective and aesthetical function similar to the function of coatings obtained using terracotta elements.

The use of terracotta coating elements is limited at present by the high cost due both to purchase prices and to laying costs for each modular element.

This is a real problem in builduing since terracotta coatings, both when used as floors and for vertical surfaces such as walls, look nice and are also exceptionally resistant to wear and weather.

The industry involved could not solve this problem yet and no products are available on the market that allow coatings having the excellent aesthetical and technical features of terracotta elements to be realized at reasonable costs.

It is an aim of the invention to provide a product having such a low manufacturing and laying cost as to be widely used both in luxury and in low-cost building.

To this aim the applicant has devised an easy-to-apply pasty composition which after setting has the same typical aspect and technical features as terracotta elements.

This composition is obtained by mixing the following components:
a highly resilient latex such as a vinyl-acrylic copolymer, a styrol-acrylic copolymer or an acrylic resin;
a bituminous emulsion;
a first inert comprising either washed and sifted pit sand or ground glass fiber;
a second inert comprising baked and ground "0" grain clay; and,
a thickening agent comprising an emulsionated acrylic copolymer

This composition which can be easily spread as a coating for walls and the like creates a surface having the same aspect as terracotta elements which is resistant to weather and long lasting.

Particularly, according to the invention, the substances forming the composition should be present in the following proportions by weight;
latex of vinyl-acrylic or styrol-acrylic or acrylic copolymer, 42%;
10+60% bituminous emulsion such as the emulsion known as EP FINA, 3+10%;
first inert comprising washed and sifted pit sand or glass fiber, 2+4%;
second inert comprising a baked and ground "0" grain clay, 30+70%;
thickening agent, 1+3%;
plasticizer, 1+8%; and,
water as necessary to reach 100%.

More particularly, the above-mentioned components have the following proportions by weight in a composition which prooved extremely good for outdoor flooring and wall coatings:
latex of vinyl-acrylic (or styrol-acrylic) copolymer, 42%;

bituminous emulsion, 1%;
first inert (baked and ground clay) 40%;
thickening agent (emulsionated acrylic copolymer), 2%;
plasticizer, 4%; and,water as necessary to reach 100%.

The composition applied by spraying to the surface to be coated formed a homogeneous layer having the typical color of terracotta and the same resistance and durability characteristics.
The vinyl-acrylic or styrol-acrylic copolymer can be replaced by an acrylic resin.

It should be noted that the first inert, that is pit sand, has the function of providing the characteristics of mechanical and weather resistance and the bituminous emulsion has a double function in that it favours the adhesion to the substrate and also provides the finished coating with the typical color of terracotta.

## Claims

1.- A composition having a protective and aesthetical function similar to the function of coatings formed by terracotta elements, comprising:
a highly resilient latex;
a bituminous emulsion;
a first inert;
a second inert comprising a baked and ground clay;
a thickening agent comprising an emulsionated acrylic copolymer; ; and,
a plasticizer.

2.- The composition according to claim 1, wherein the various components have the following proportions by weight:
latex, 10+60%;
bituminous emulsion, such as the emulsion known on the market as EP FINA, 1+10%;
first inert, 2+4%;
second inert comprising a baked and ground "0" grain clay, 30+70%;
thickening agent, 1+3%;
plasticizer, 1+8%.

3.- The composition according to claim 2, wherein the various components have the following optimal proportions by weight:
latex, 42%;
bituminous emulsion, 1%;
first inert, 2%;
second inert (baked and ground clay), 40%;
thickening agent (emulsionated acrylic copolymer), 2%;.
plasticizer, 4%;
water, 9%.

4.- The composition according to claims 2 and 3, wherein said latex is a vinyl-acrylic copolymer.

5.- The composition according to claims 2 and 3, wherein said latex is a styrol-acrylic copolymer.

6.- The composition according to claims 2 and 3, wherein said latex is an acrylic resin.

7.- The composition according to claims 2 and 3, wherein said first inert is washed, ground and sifted pit sand.

8.- The composition according to claims 2 and 3, wherein said first inert is ground glass fiber.